# EUROPEAN PATENT APPLICATION

(11) **EP 2 254 055 A1**
(43) Date of publication of application: **24.11.2010**
(21) Application number: 10158035.5
(22) Date of filing: 26.03.2010
(51) Int. Cl.: G06F 13/38, G06F 1/16, G06F 1/26

(54) **PC docking station simplification**

(30) Priority: 21.05.2009 US 180315 P; 24.02.2010 US 711572
(71) Applicant: STMicroelectronics, Inc., Carrollton Texas 75006 (US)
(72) Inventor: Kobayashi, Osamu, Los Altos CA 94024-5809 (US)
(74) Representative: Style, Kelda Camilla Karen

(57) **Abstract**

A simplified docking station arranged to couple together a media source device and a media sink device is disclosed. The docking station is configured to accept power from the media source device for powering the docking station itself and for providing power to the media sink device.

## Description

### CROSS-REFERENCE TO RELATED APPLICATION

This patent application claims the benefit of priority under 35 U.S.C. 119(e) to U.S. Provisional Patent Application Serial No. 61/180,315 (Attorney Docket No. GENSP227P) filed May 21, 2009 and entitled "PC DOCKING STATION SIMPLIFICATION," which is hereby incorporated by reference herein for all purposes.

### TECHNICAL FIELD

The present invention relates to computer hardware. More particularly, methods and devices are described for coupling a media source device together with a media sink device by way of a docking station.

### BACKGROUND OF THE INVENTION

Laptop computers are becoming far more widely used today than in the past as their computing power has increased and their cost has decreased. Consumers prefer to carry smaller and lighter laptop computers. Computer manufacturers frequently try to reduce the size and weight of their portable computers to keep up with the desires of consumers. One manner in which manufacturers are reducing the size and weight is by removing input/output ports on the laptop as much as possible. The reduced ports tended to not be a problem when the user was using the laptop in a mobile fashion. However, when the user is working at a desk, connecting the computer to multiple peripheral devices such as a keyboard, mouse, external display or storage device is desired. In order to solve this problem, docking stations have been developed.

Docking stations, sometimes called port replicators, have a number of ports for connecting to devices such as a keyboard, mouse, video display or storage device. When a laptop is docked with the docking station, those ports are provided to the user as if they were part of the laptop computer. This allows a laptop to connect with many more peripheral devices than would be possible using just the ports on the laptop itself.

A typical docking station has a proprietary connector configured to mate with a matching proprietary connector on a laptop. Due to the proprietary nature of these connectors, an end user is only able to use a docking station that matches with their particular laptop. The docking station-laptop connections are often made specific to the manufacturer, but are also sometimes made specific to the model of laptop. For example, the connector on a Dell docking station may only allow Dell laptops to dock, or a Dell docking station may be made such that the connector only allows a certain model of Dell laptop to connect. This is limiting for the user. For example, if a user purchases a new laptop that happens to be incompatible with their current docking station, they would need to purchase a new docking station.

### SUMMARY OF THE INVENTION

A docking station arranged to couple together a media source device and a media sink device is disclosed. The docking station includes at least a connector that, in turn, includes a power pin, the power pin adapted to receive power from the source device, where the received power is used to operate the docking station.

A method of using a docking station is also disclosed. The method can be carried out by performing at least the following operations: coupling a media source device with the docking station by way of a multichannel docking connector, and providing power to the docking station from the media source device over the multichannel docking connector.

In yet another embodiment, a system is described that includes at least a media source device, a media sink device, a docking station arranged to couple together the media source device and the media sink device. The docking station includes at least a connector having a power pin, the power pin adapted to receive power from the source device, wherein the received power is used to operate the docking station

### BRIEF DESCRIPTION OF THE DRAWINGS

The invention and the advantages thereof may best be understood by reference to the following description taken in conjunction with the accompanying drawings in which:

**Fig. 1** is a high level overview of an embodiment of the inventive docking station being used in accordance with the principles of the invention.

**Fig. 2** is a diagram illustrating one embodiment in accordance with the principles of the invention including details of the docking connector.

**Fig. 3** is a diagram illustrating one embodiment in accordance with the principles of the invention, including a representation of the virtual channels of the main link.

**Fig. 4** is a diagram illustrating the pins of one embodiment of a connector in accordance with the principles of the invention.

**Fig. 5** is a flow diagram illustrating one embodiment in accordance with the principles of the invention.

In the drawings, like reference numerals are sometimes used to designate like structural elements. It should also be appreciated that the depictions in the figures are diagrammatic and not to scale.

### DETAILED DESCRIPTION

The present invention relates generally to docking stations. More particularly, methods and devices are described for a simplified computer docking station. The invention can be implemented in numerous ways, including as a method, system, device, or apparatus. Several embodiments of the invention are discussed below.

In the following description, numerous specific details are set forth to provide a thorough understanding of the present invention. It will be apparent, however, to one skilled in the art that the present invention may be practiced without some or all of these specific details. In other instances, well known process steps have not been described in detail in order to avoid unnecessary obscuring of the present invention.

The inventive docking station can be used to connect a media sink device, such as a display device to a media source device, such as a laptop computer. The docking station also allows the connection of a wide variety of peripheral devices to the laptop computer. Using the multichannel docking connector described below allows the docking station to be powered by the media source device. In this case, the media source device can also provide power to the media sink device and any or all peripheral devices by way of the docking station. It is also possible for the docking station to provide power to the media source device if, for example, the docking station is independently connected to a power source.

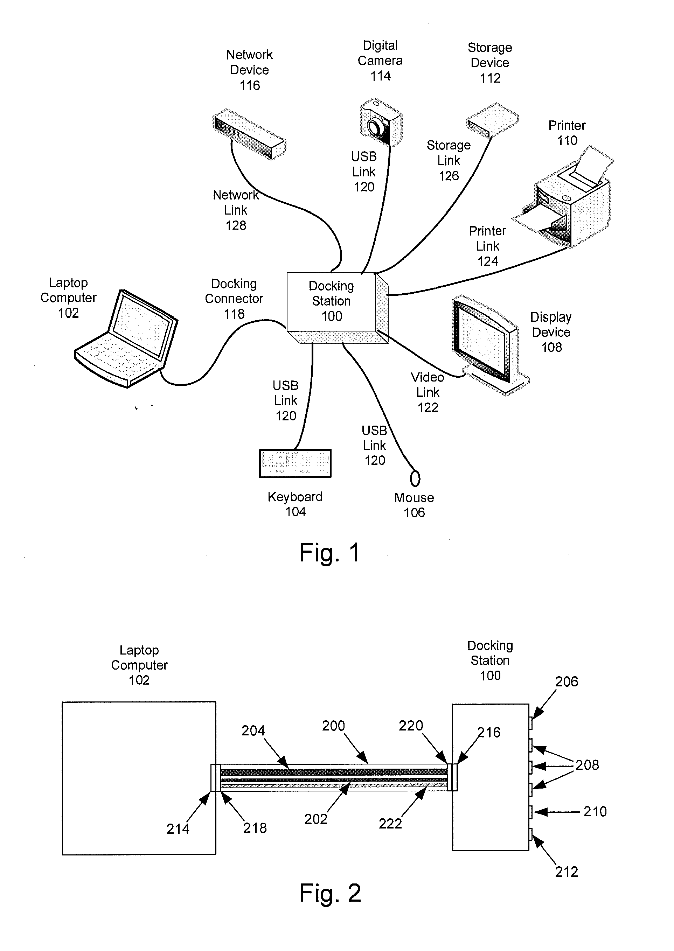

Figure 1 shows an example of an embodiment of the invention. The inventive docking station 100 allows the connection of a laptop computer 102 using a single, non-proprietary docking connector 118. The docking station 100 is shown connected to a number of peripheral devices in a number of manners, thus demonstrating the flexibility of the docking station 100. The peripherals shown are given as examples of common peripheral devices that could be connected to the docking station 100. The invention is not limited to connecting to just these devices, neither are these devices necessary for the functioning of the invention.

A keyboard 104 and mouse 106 are shown connected to the docking station 100 via a USB link 120. It is also possible that the keyboard 104 and mouse 106 be connected in other manners. For example, a wireless connection may be used. Typical wireless connections used for keyboards and mice are implemented using a device attached to the computer, or in this case the docking station 100, which is a wireless transceiver. Examples of wireless technologies used for this purpose include radio frequency (RF) and Bluetooth.

A display device 108 is connected to the docking station 100 via a video link 122. The display device 108 may be one of a number of display technologies, including liquid crystal display (LCD), cathode ray tube (CRT), plasma or light emitting diode (LED) technologies and the like, for example. The video link 122 may be analog or digital. Common analog communication methods include VGA, component video or s-video. Common digital communication methods include DVI, HDMI and DisplayPort. It is also possible that the docking station 100 be connected to multiple display devices 108 using multiple video links 122. The multiple display devices 108 and video links 122 may use the same technologies or may be any combination of display technologies. For example, there may be two display devices 108 connected to the docking station 100, with one being an LCD panel connected via DVI and one being a CRT monitor connected via VGA. Another example could have three LCD panels where one is connected via DVI and two are connected via DisplayPort. Many combinations are possible.

A printer 110 is connected to the docking station 100 via a printer link 124. The printer 110 may take the form of a laser printer or an ink jet printer, for example. It is also possible for the printer 110 to take the form of a multi-function device, such as one that prints, scans, copies and faxes. The printer 110 may be connected in a number of different ways. For example, the printer link 124 may connect to a parallel port or USB port on the docking station 100, or it may be an RF or Bluetooth wireless connection much like that described above with regard to the keyboard 104 and mouse 106.

A storage device 112 is connected to the docking station 100 via a storage link 126. The storage device 112 may include a number of different devices such as: an external CD or DVD drive, an external hard disk drive, a storage cabinet holding one or more hard disk drives or a solid state drive (SSD) and the like, for example. The storage link 126 connecting the storage device 112 to the docking station may be implemented using many different technologies such as USB, Firewire or RF or Bluetooth wireless, for example. Additionally, while only one storage device 112 is shown, there may be more than one and they may use one or more than one storage links 126 and link technologies. For example, there may be an external DVD-ROM drive connected via USB and an external hard disk drive connected via Firewire. Many combinations are possible.

A digital camera 114 is connected to the docking station 100 via a USB link 120. The digital camera 114 represents an example of the myriad of peripheral devices available that are connected via a USB link 120, any one or more of which could be used together with or in place of the digital camera 114. Some examples include: scanners, media players, mobile phones and lights.

A network device 116 is connected via a network link 128. Some examples of possible network devices 116 include a network switch, network hub, cable or DSL modem or wireless access point. The network link 128 could be a network cable (CAT-5 or CAT-6 Ethernet cable, for example) that connects to an RJ45 jack in the docking station. In an office setting or in some home settings, the network link 128 could comprise a network cable connected to the docking station 100 as explained above and connected to an RJ45 jack in a wall plate, which then connects to the network device 116 via network cable run through the walls and/or ceilings. Alternatively, instead of connecting through a wall jack, the network link 128 may connect directly to the network device 116. Another embodiment could have the docking station 100 include a wireless network transceiver, the network device 116 be a wireless access point and the network link 128 be a wireless connection using technology such as 802.11g or 802.11N, for example.

The peripheral devices described above are merely examples and should not be considered as limiting the invention. While the figures and the descriptions of the invention refer to a laptop computer or a notebook computer, the inventive docking station can be used with other types of computers including, desktop computers, netbook computers or tablet computers.

Figure 2 shows an embodiment of the inventive docking station 100 as it is connected to a laptop computer 102. The docking connector 118 may include a cable 200 with cable connectors 218 and 220 that connect to a laptop port 214 on the laptop and a similar docking port 216 on the docking station 100, respectively. The ports 214, 216, connectors 218, 220 and the cable 200 are configured such that there is a uni-directional main link 204 for isochronous data streams and a bi-directional auxiliary channel 202 for link setup and other data traffic, such as various link management information, Universal Serial Bus (USB) data, etc. Additionally, the ports 214, 216, connectors 218, 220 and the cable 200 are configured to include a power line 222 for transferring power from the docking station 100 to the laptop computer 102 or vice versa, from the laptop computer 102 to the docking station 100.

The embodiment shown in figure 2 also includes a set of peripheral ports 206-212 on the docking station 100. In this example, the ports include: video port 206, three USB ports 208, serial port 210 and network port 212. While figure 2 shows these specific examples of peripheral ports, it is important to note that other numbers and types of peripheral ports are possible, including those described above.

The auxiliary channel 202 is used to carry data such as link setup information and other data types such as USB traffic, for example. The auxiliary channel 202 may take the form of a single half-duplex bi-directional channel requiring a transmitter and receiver within the devices at each end. Another embodiment has the auxiliary channel 202 formed of a single unidirectional channel running from the sink device (in this figure, docking station 100) to the source device (in this figure, the laptop computer 102) together with a single unidirectional channel that is part of the main link 204 and that runs from the source device to the sink device. Thus, this embodiment of the auxiliary channel requires the transmitter and receiver used for the main link 204 and also a transmitter at the sink device and a receiver at the source device.

The main link 204 can be logically divided into a number of virtual channels, as needed. This allows the main link 204 to carry multiple isochronous data streams (such as multiple video streams and data streams to other peripheral devices). Each virtual channel is capable of transferring isochronous data streams at multiple gigabits per second (Gbps). In the described embodiment, the transfer rate of the main link is adjustable to compensate for link conditions. For example, in one implementation, the speed of the main link 204 can be adjusted in a range between approximately 1.0 Gbps and approximately 2.5 Gbps per virtual channel. Regardless of the transfer rate of each channel, the aggregate transfer rate of all channels cannot exceed the overall transfer rate of the entire main link 204.

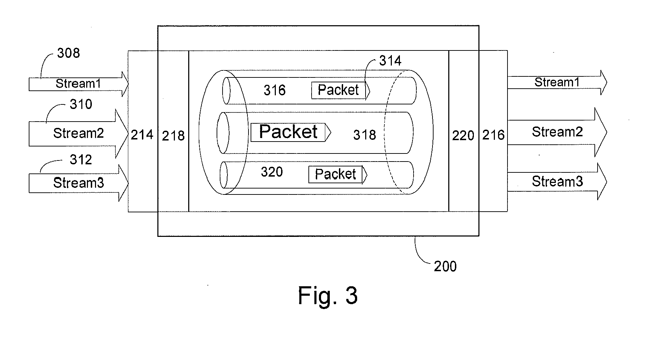

Figure 3 shows detail of the cable 200 and the uni-directional main link 204. Cable connector 218 is shown connecting to laptop port 214 and cable connector 220 is shown connecting to docking port 216. The cable 200 is shown carrying three data streams 308, 310, 312 that have been packetized and sent across the main link 204 by way of three virtual channels 316, 318, 320, respectively. While three streams are shown being transported over three virtual channels, the invention is not limited to requiring three streams and three channels, nor is the invention limited to handling only three streams and three channels. Not shown are the transmitters used to packetize and send the data over the channels, as well as the receivers configured to receive and depacketize the data. The high bandwidth and multiple channels allows the docking station to connect to many different peripheral devices and display device combinations and still provide the data and power required across the docking connector 118.

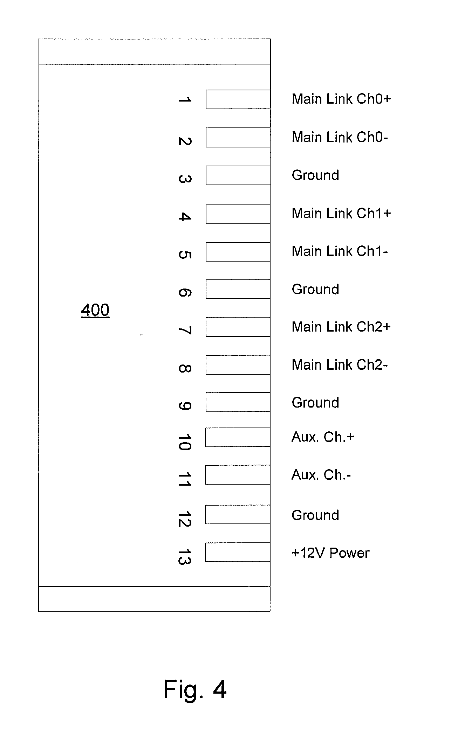

Figure 4 shows a specific embodiment of a connector 400. This connector 400 is a 13 pin example of a multiple pin connector that can be used for the cable connectors 218 and 220. In the specific embodiment, the laptop port 214 and the docking port 216 would have a matching set of pins. As noted, Figure 4 shows 13 pins as an example. The exemplary connector 400 has three pairs of pins 1-2, 4-5, 7-8 for carrying data over the main link 204, one pair of pins 10-11 for carrying data over the auxiliary channel 202, one pin 13 for bi-directionally carrying power and four pins 3, 6, 9, 12 that are connected to ground. Connector 400 may accommodate up to 16 pins. In another specific embodiment, pin 9 may not be connected to ground. Alternatively, pins 9-10 may be for carrying data over Main Link Ch3+ and Main Link Ch3-, thereby making four lanes available for data transport. Pin 10 may be followed by an additional pin 11 that is connected to ground. Pins 12-13 may be for carrying data over Aux. Ch.+ and Aux. Ch-(shown as pins 10-11 in Figure 4). Pin 14 may be connected to ground and pin 15 may be for bi-directionally carrying power (similar to pin 13 in Figure 4). A pin 16 may be for Hot Plug Detect (HPD).

The power pin 13 can be used to transfer power from the docking station 100 to the laptop 102 or vice versa, from the laptop 102 to the docking station 100. When the docking station 100 is connected through a power adapter to a power source, it can provide power to the laptop 102, which may be used to power the laptop 102 or charge its batteries, for example. When the laptop 102 itself is connected to a power adapter, it can provide power to the docking station 100 for the functioning of the docking station 100 and to provide power to display devices and other peripheral devices connected to the docking station 100. The laptop 102 is also capable of providing power to the docking station 100 if the laptop is being powered by its battery. One example of a scenario where this functionality could be important is when a user's laptop 102 is connected to the docking station 102, which is in turn connected to a display device 108 and a storage device 112, both of which are powered by the docking station 100. If the user was modifying a file stored on the storage device 112 and the power in the user's home were to fail, the laptop 102 would power the docking station 100, and thus the display device 108 and storage device for sufficient time that the user would be able to save the modified file back to the storage device 112 preventing data loss.

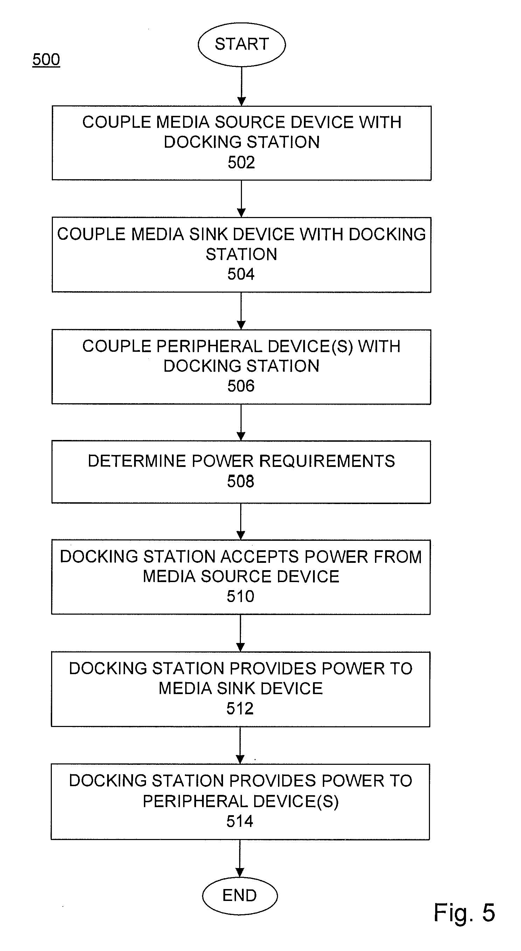

Figure 5 shows a flowchart of a process 500 of operating the docking station 100 in accordance with an embodiment of the invention. In step 502, a media source device is coupled with the docking station. This may be accomplished by way of the non-proprietary, high bandwidth connector described above. The media source device may be a laptop computer, for example. At step 504, a media sink device is coupled with the docking station. The media sink device may be a display device, for example. Step 506 recites coupling one or more peripheral devices with the docking station. The peripheral devices may be included in the many devices described above, or any other peripheral device.

Once coupled together the media source device and the docking station now determine the power requirements of the docking station (step 508). Since the docking station may be capable of providing its own power and because it may have changing power requirements, a handshaking procedure may be required through which a power need of the docking station and a power availability from the media source device are used in determining the level of power sent from the media source device to the docking station. Once the power level is determined, the docking station can now accept power from the media source device at the determined power level (step 510). The power provided by the media source device may be used for the operation of the docking station itself,and/or passed through the docking station to the media sink device and any peripheral devices requiring power from the docking station, as shown in steps 512 and 514. Alternatively, the media sink device or another peripheral device could supply power to the docking station, which could then power the docking station itself or be provided to other peripheral devices and/or the media source device. This may or may not require the handshaking procedure between the docking station and the media source device.

While figure 5 shows a particular order to the steps of operating the docking station, other ordering of the steps is possible. However, the step of determining the power requirements (step 508), must occur after the media source device has been coupled with the docking station (step 502).

The foregoing description, for purposes of explanation, used specific nomenclature to provide a thorough understanding of the invention. However, it will be apparent to one skilled in the art that the specific details are not required in order to practice the invention. Thus, the foregoing descriptions of specific embodiments of the present invention are presented for purposes of illustration and description. They are not intended to be exhaustive or to limit the invention to the precise forms disclosed. It will be apparent to one of ordinary skill in the art that many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. It is intended that the scope of the invention be defined by the following claims and their equivalents.

## Claims

1. A docking station arranged to couple together a media source device and a media sink device, comprising:
a connector, comprising:
a power pin, the power pin adapted to receive power from the source device, wherein the received power is used to operate the docking station.

2. The docking station of claim 1, wherein the power received by the docking station is further used to power the sink device.

3. The docking station of claim 1 or 2, wherein the media source device is a personal computer.

4. The docking station of any preceding claim, wherein the media sink device is a or more display devices.

5. The docking station of claim 4, wherein the display device couples with the docking station by way of one of the following connector types: VGA DSUB15, DVI, HDMI, Display Port.

6. The docking station of any preceding claim further comprising:
at least one peripheral port configured to couple at least one peripheral device with the media source device.

7. The docking station of claim 6, wherein the at least one peripheral device includes at least one of the following: a keyboard, a mouse, a network adapter and a storage device.

8. The docking station of claim 6 or 7, wherein the at least one peripheral port comprises at least one of: a USB port, a network port, a serial port, a parallel port, a wireless connection.

9. A method of using a docking station, said method comprising:
coupling a media source device with the docking station by way of a multichannel docking connector; and
providing power to the docking station from the media source device over the multichannel docking connector.

10. The method of claim 9, further comprising:
before the providing power to the docking station, determining a power level to be provided to the docking station.

11. The method of claim 10, wherein the determining a power level to be provided to the docking station is performed using at least a level of power provided by the media source device and a level of power required by the docking station.

12. The method of claim 11, further comprising:
coupling a media sink device with the docking station, the media sink device receiving power from the media source device via the docking station.

13. The method of any of claims 9 to 11, further comprising:
coupling at least one peripheral device with the docking station.

14. The method of claim 13, wherein the media sink device couples with the docking station by way of one of the following connector types: VGA DSUB 15, DVI, HDMI, Display Port and wherein the at least one peripheral device couples with the docking station by way of at least one of the following connections: a USB port, a network port, a serial port, a parallel port, a wireless connection.

15. A system comprising:
a media source device;
a media sink device; and
a docking station as claimed in any of claims 9 to 14.
